# EUROPEAN PATENT SPECIFICATION

(11) **EP 0 350 041 B1**
(45) Date of publication and mention of the grant of the patent: **03.11.1993**
(21) Application number: 89112383.8
(22) Date of filing: 06.07.1989
(51) Int. Cl.: C07C 69/743, A01N 53/00

(54) **Esters of 2,2-dimethyl-cyclopropane-carboxylic acid**
2,2-Dimethylcyclopropancarbonsäureester
Esters de l'acide 2,2-diméthylcyclopropanecarboxylique

(30) Priority: 07.07.1988 IT 2126888
(43) Date of publication of application: 10.01.1990
(73) Proprietor: MINISTERO DELL' UNIVERSITA' E DELLA RICERCA SCIENTIFICA E TECNOLOGICA, 00196 Roma (IT)
(72) Inventor: Capuzzi, Luigi, I-28100 Novara (IT); Bettarini, Franco, I-28100 Novara (IT); Castoro, Paolo, I-13100 Vercelli (IT); Massimini, Sergio, I-20158 Milano (IT); Caprioli, Vincenzo, I-27028 San Martino Siccomario Pavia (IT)
(74) Representative: Weinhold, Peter, Dr.

(56) References cited:
- EP-A- 0 200 943
- EP-A- 0 206 167
- EP-A- 0 258 815

## Description

The present invention relates to esters derived from 2,2-dimethyl-cyclopropane-carboxylic acid which show insecticidal and acaricidal activity (synthetic pyrethroids), to the processes for preparing them, to the insecticidal and acaricidal compositions containing said esters, and to the use of said compositions for the control of insects and acari.

Several compounds belonging to the class of the synthetic pyrethroids are known, which are used for controlling noxious insects in agriculture and other fields. Among these, the most important compounds are the derivatives of 2,2-dimethyl-cyclopropane-carboxylic acid such as, e.g., permethrin, cypermethrin, deltamethrin ("Synthetic Pyrethroids", A.C.S. Symposium Series 42, 1977), and those disclosed in EP-A-258,815.

An important limiting factor associated with the presently marketed products, in particular the products derived from α-cyano-phenoxy-benzyl alcohol, is that they are considerably toxic also for useful insects (such as bees and predator insects) as well as for other animals (in particular fish).

It has now been found that there are ester derivatives of 2,2-dimethyl-cyclopropane-carboxylic acid which are highly insecticidal and acaricidal as regards some noxious species, but at the same time are only scarcely toxic for useful insects and more highly developed animals.

Therefore, the object of the present invention are new esters of 2,2-dimethyl-cyclopropane-carboxylic acid having the general formula (I): 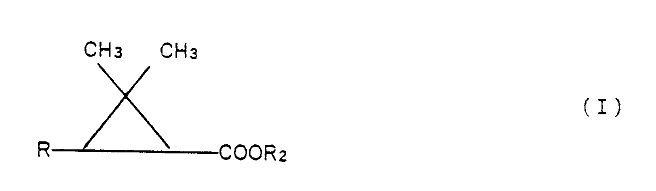
wherein:
- R: represents a 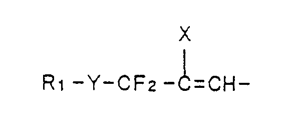 or a

R₁-Y-CF₂-C≡C-

group;
- Y: is O or S;
- X: is selected from H, F, Cl, Br and -CF₃;
- R₁: represents an either linear or branched (C₁-C₆)-alkyl or (C₃-C₆)-cycloalkyl group, said groups optionally being substituted with halogen atoms; and
- R₂: is selected from one of the following groups: 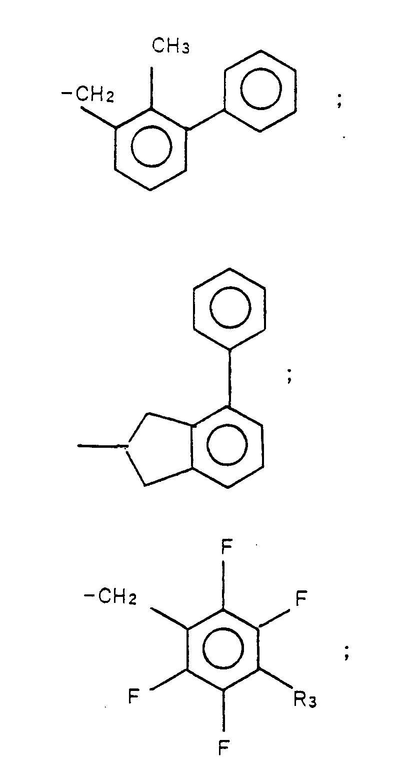
and 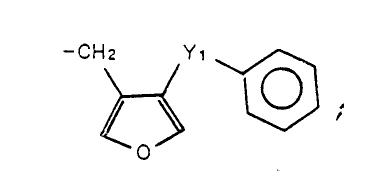
wherein:
- R₃: represents F, a (C₁-C₅)-alkyl, an alkoxy, an alkylthio, an alkylsulfinyl or an alkylsulfonyl group; and
- Y₁: is O or CH₂.

Specific examples of the generic groups mentioned above are the following:
- C₁-C₆-alkyl:: methyl, ethyl, n-propyl, i-propyl, n-butyl, i-butyl, sek-butyl, tert.-butyl, pentyl and hexyl;
- C₃-C₆-cycloalkyl:: cyclopropyl, cyclobutyl, cyclopentyl and cyclohexyl;
- halogen:: F, Cl and Br;
- C₁-C₅-alkyl:: seeC₁₋₆-alkyl above;
- alkoxy:: (C₁-C₅)-alkoxy, such as methoxy, ethoxy, n- and i-propoxy and butoxy;
- alkylthio:: (C₁-C₅)-alkylthio, such as methylthio, ethylthio, n- and i-propylthio and butylthio;
- alkylsulfonyl and alkylsulfinyl:: see the above alkylthio groups, wherein -S- is replaced by -SO₂- and -SO- units, resp..

Preferred compounds according to the present invention show one or more of the following preferred groups:
- R:: 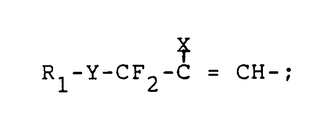
- Y:: O;
- X:: H, F or Cl, particularly F and Cl and most preferred Cl;
- R₁:: (C₁-C₆)-alkyl groups, particularly (C₁-C₃)-alkyl groups, and (C₃-C₆)-cycloalkyl groups, said groups being substituted by at least one up to the maximum number of halogen atoms selected from F, Cl and Br (particularly F);
particularly preferred are methyl, trifluoromethyl, 2,2,2-trifluoroethyl, 2,2,3,3-tetrafluoropropyl and 2,2,3,3,3-pentafluoropropyl;
- R₂:: 2-methyl-3-phenyl-benzyl, pentafluorobenzyl and 2,3,5,6-tetrafluoro-4-(R₃)-benzyl;
- R₃:: (C₁-C₅)-alkyl, particularly methyl and ethyl; methoxy, ethoxy; methylthio; methylsulfonyl; and methylsulfinyl.
The above esters are endowed with a high insecticidal and acaricidal activity against a large number of species of harmful insects in the agricultural and civil fields, e.g. those belonging to the classes of Hemipters, Lepidoptera, Coleoptera, Diptera, Blattidae and Tetranychae. On the other hand, they are not very toxic for important useful insects (such as bees etc.) and for more highly developed animals (such as mammals, fish and birds).

The preparation of the compounds of formula (I) may be carried out by esterification of a carboxylic acid, or an acyl derivative thereof, of general formula (II): 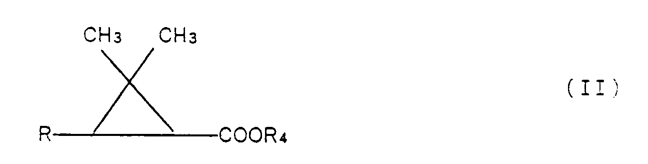
wherein:
- R: has the meanings given above and
- R₄: represents H, Cl or (C₁-C₄)-alkyl,
with an alcohol of formula

R₂-OH

wherein
- R₂: has the meanings indicated above with respect to formula (I).

The esterification can be carried out according to various methods which are within the normal practice of organic chemistry.

Preferably, an acid of formula (II) (R₄ = H) is converted into the corresponding acyl chloride by means of a suitable agent, such as, e.g., oxalyl chloride, thionyl chloride, phosphorus pentachloride, etc., in an inert solvent and at a temperature of from room temperature up to the reflux temperature of the solvent. The acyl chloride is then reacted with one equivalent of an alcohol of formula

R₂-OH

in an inert, anhydrous organic solvent at room temperature and in the presence of an organic base, preferably
a tertiary amine, such as pyridine or triethylamine.

The alcohols of formula R₂-OH are known compounds.

The compounds of general formula (II), wherein
- R =: R₁-Y-CF₂-C(X)=CH- and
- X =: F, Cl, Br, CF₃,
can be prepared by starting from poly-halogenated ethers of formula (III) 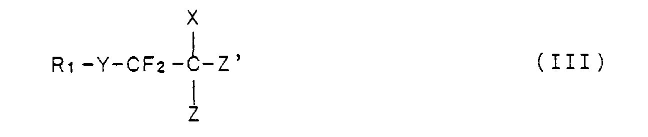
wherein R₁, X and Y have the meanings given above in connection with general formula (I), and Z and Z′, the same or different from each other, are Br or Cl atoms (particularly when X = Cl).

The compounds of formula (III) are known and can be obtained by processes described in the relevant technical literature, such as, e.g., in Angew.Chem.Int.Ed.Engl. 24 (1985) 871; US-A-3,388,078 (C.A. 69:28654a) and J.Org.Chem. 50 (1985), 4047-4051.

The compounds of general formula (II) can be efficiently prepared by one of the following methods:

### Method "A"

By means of a procedure similar to that described, e.g., in DE-A-2,539,895 and Bull.Chem.Soc.Jpn. 52, 1511 (1979), a compound of formula (III) is added to the ethyl ester of 3,3-dimethyl-4-pentenoic acid in the presence of a suitable promoter of radical reactions (step 1A). The resulting adduct is cyclized (step 2A) and also dehydrohalogenated (step 3A) by treatment with a base, yielding a compound of general formula (II)
wherein
- R₄ =: C₂H₅ and
- R =:

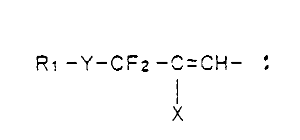

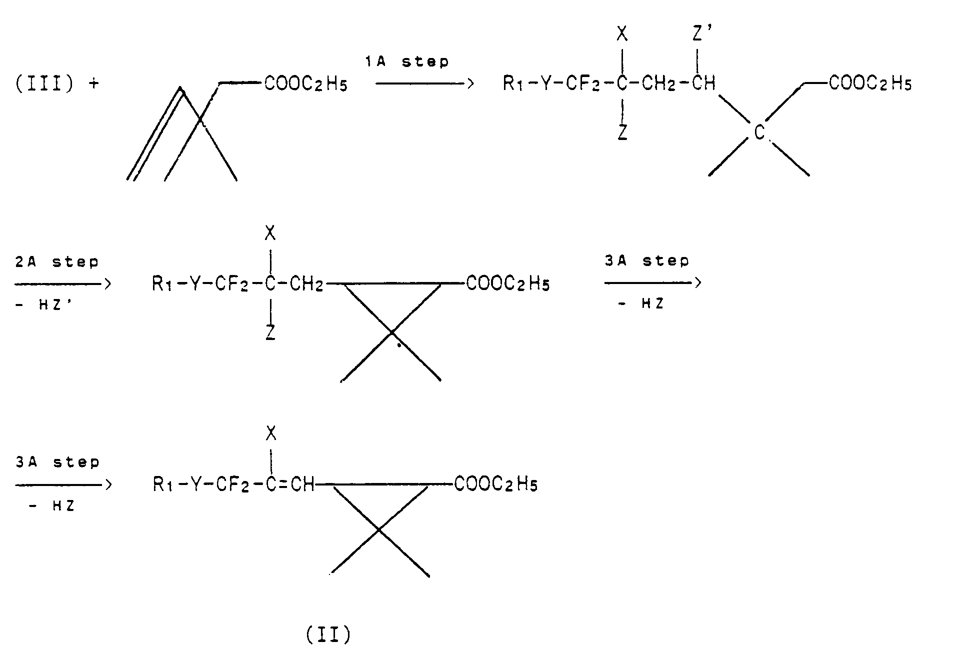

### Method "B"

In said method, which is analogous to that disclosed in EP-A-187,674, a compound of formula (III) is reacted with caronaldehyde (ethyl 2,2-dimethyl-3-formyl-cyclopropane-carboxylate) in the presence of metals such as zinc or magnesium (step 1B). By means of the subsequent dehydroxy-halogenation of the obtained carbinol of formula (IV) - e.g., by acetylation and subsequent treatment with Zn (step 2B) - a compound of general formula (II) is obtained
wherein
R₂ = C₂H₅ and
R =

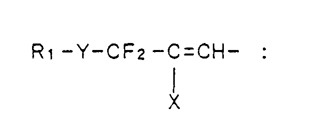

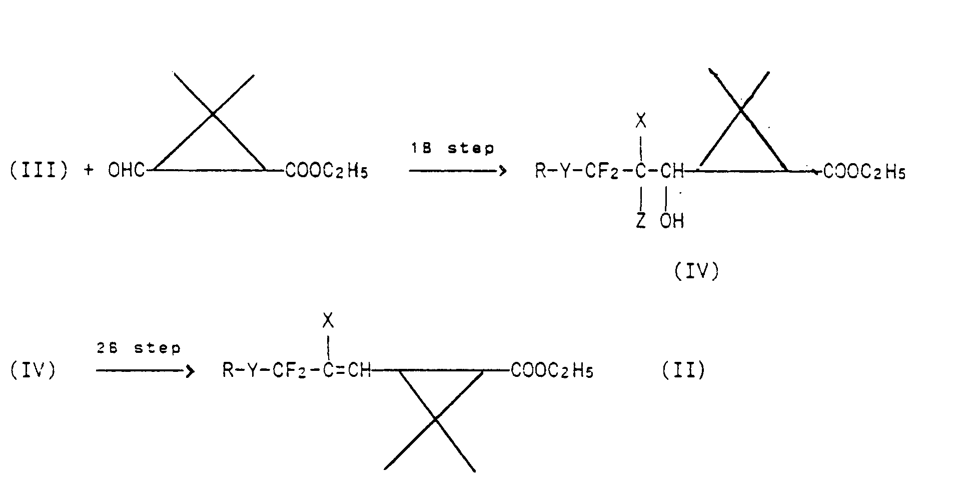

Method "C"

Alternatively, the compounds of general formula (II) wherein
- R =: R₁-Y-CF₂-C(X)=CH- and
- X =: F, Cl, Br, CF₃
can be prepared by reacting a metal salt of formula

R₁Y⁻ M⁺ (VI)

with a difluoroolefin of formula (V): 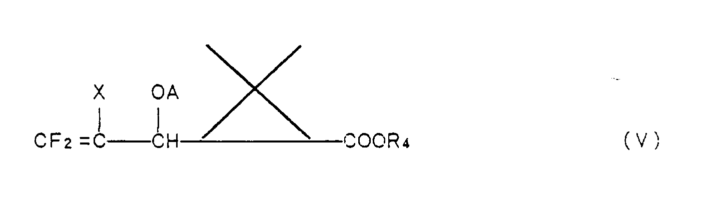
according to the following reaction scheme: 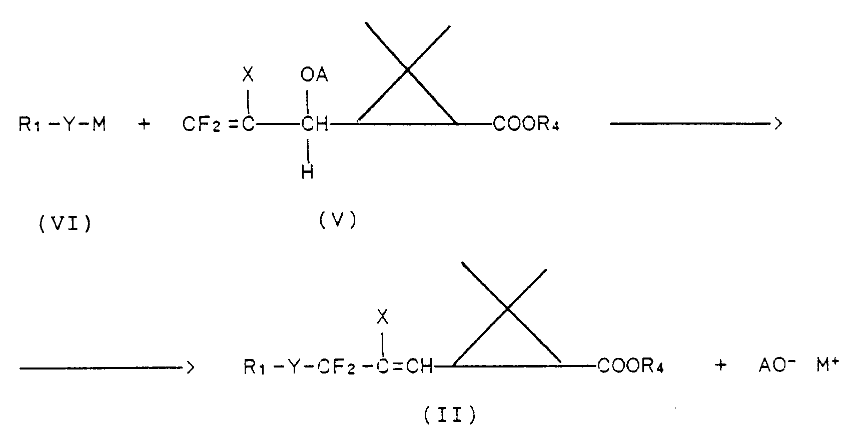
wherein:
- R₁, Y, X, R₄: have the meanings specified above;
- M: is an alkali metal selected from K, Li and Na; and
- A: represents H or an acyl or sulfonyl group preferably selected from CH₃CO, CH₃SO₂, CF₃SO₂ and CH₃-C₆H₄-SO₂.

### Method "D"

The compound of general formula (II) wherein
- R =: R₁-Y-CF₂-C≡C-
can be prepared by dehydrochlorination of the compounds of general formula (II) wherein:
- R =: R₁-Y-CF₂-C(X)=CH-, and
- X =: Cl or Br,
according to the following scheme: 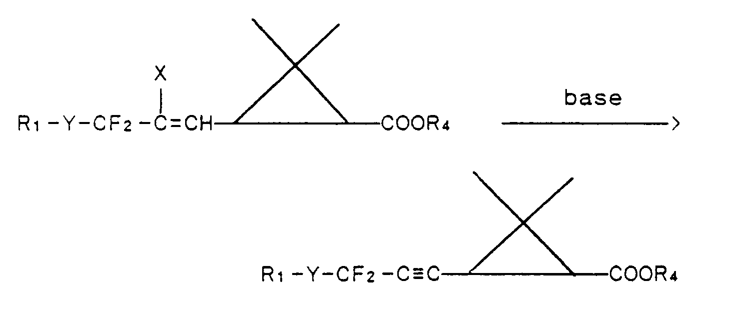
wherein the various symbols have the meanings given above.

The dehydrochlorination can be carried out according to various techniques as described in the relevant technical literature and is preferably carried out by treating the initial product with a strong base such as NaOH, KOH, NaNH₂, tert.-BuOK, in an aprotic dipolar solvent and at a tempeature preferably within the range of from 40°C up to about 100°C.

### Method "E"

The compounds of general formula (II) wherein X = H can be prepared by hydrogenation of the corresponding propargyl derivatives of formula (II), with

R = R₁-Y-CF₂-C≡C-

according to conventional methods of catalytic hydrogenation: 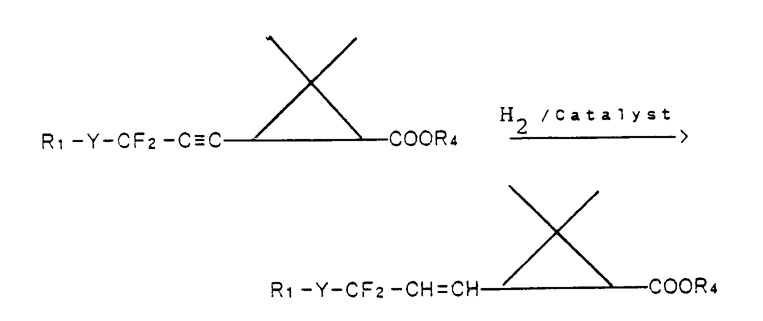
The compounds of general formula (I) can be in the form of mixtures of isomers.

The separation of the mixtures into their components can be carried out by known techniques, such as column chromatography or thin-layer chromatography.

The isolation and the use of each of the steric and/or configurational isomers, as well as the direct use of the mixtures which can be obtained from the preparation of the compounds, and the use of the mixtures resulting from an incomplete separation of the isomers are also comprised within the scope of the present invention.

As mentioned above, the compounds of formula (I) are endowed with a high insecticidal activity.

They are characterized by a broad spectrum of activity against insects belonging to several families, such as Hemiptera, Lepidoptera, Diptera, Coleoptera, Aphids, etc. Furthermore, they also display a satisfactory acaricidal activity.

Due to their advantageous properties, the compounds of formula (I) are very suitable for use in cultivations of agrarian interest, and particularly in the control of harmful insects in locations inhabited by man and by domestic animals and breeding livestock.

For purposes of their use in practice, both in agriculture and in other fields of application, the compounds according to the present invention are advantageously employed in the form of suitable compositions.

These compositions preferably contain, besides one or more compound(s) of formula (I) as at least one of their active principles, inert solid carriers (such as, e.g., kaolin, silica, talc, attapulgite, diatomaceous earth, etc.) or inert liquid carriers (organic solvents, vegetable or mineral oils, water and mixtures thereof) and, optionally, other additives which are normally used in the preparation of corresponding formulations, such as surfactants, suspending agents, dispersants and wetting agents.

For particular requirements, or in order to expand the spectrum of activity of the compositions, still other active ingredients may be incorporated into said compositions, such as, e.g., other insecticides or acaricides, herbicides, fungicides or fertilizers.

The application doses vary as a function of several factors, such as type and level of infestation, type of composition used and climatic and environmental conditions.

For practical use in agriculture, doses of compounds of formula (I) of from 10 to 500 g/ha usually yield satisfactory results.

The following examples are given in order to illustrate the present invention without, however, limiting it.

### Example 1

Synthesis of 2-methyl-3-phenyl-benzyl cis-2,2-dimethyl-3-[2-chloro-2-(2,2,2-trifluoroethoxy)-difluoromethyl]-vinyl-cyclopropane-carboxylate.

Under a nitrogen atmosphere, 1.98 g (10 mmol) of 2-methyl-3-phenyl-benzyl alcohol, 10 ml of anhydrous ether, 1 ml of pyridine and 3.4 g (10 mmol) of cis-2,2-dimethyl-3-[2-chloro-2-(2,2,2-trifluoroethoxy)-difluoromethyl]-vinyl-cyclopropane-carbonyl chloride were placed in a 50 ml 3-neck flask.

The resulting reaction mixture was stirred for 3 hours at room temperature. Thereafter, the formed precipitate was filtered off and the filtrate was successively washed with HCl (1%), bicarbonate and brine. Then the filtrate was thoroughly dried and concentrated to dryness. A crude oil (4.8 g) was obtained, which was chromatographed on silica gel (eluent: 99:1 hexane/ethyl acetate), affording 3.5 g of pure product.
- NMR (60 MHz, CDCl₃):: δ 1.25 s,6H; 2.2 s,3H; 2.35-1.9 m,2H; 4.15 q (J=8Hz),2H; 5.10 s,2H; 6.8 d (J=3Hz); 7.4-7.05 m,8H.

### Example 2

Synthesis of 2-methyl-3-phenyl-benzyl trans-2,2-dimethyl-3-[2-chloro-2-(2,2,2-trifluoroethoxy)-difluoromethyl]-vinyl-cyclopropane-carboxylate.

Under a nitrogen atmosphere, 1.98 g (10 mmol) of 2-methyl-3-phenyl-benzyl alcohol, 15 ml of anhydrous ether, 1 ml of pyridine and 3.4 g (10 mmol) of trans-2,2-dimethyl-3-[2-chloro-2-(2,2,2-trifluoroethoxy)-difluoromethyl]-vinyl-cyclopropane-carbonyl chloride were placed in a 50 ml 3-neck flask.

The resulting reaction mixture was stirred for 3 hours at room temperature. Thereafter, the formed precipitate was filtered off and the filtrate was washed with HCl (1%), bicarbonate and brine. Then the filtrate was thoroughly dried and concentrated to dryness. A crude oil (4.5 g) was obtained, which was chromatographed on silica gel (eluent 99:1 hexane/ethyl acetate) to afford 3.69 g of pure product.
- NMR (60 MHz, CDCl₃):: δ 1.15 s,3H; 1.25 s,3H; 1.68 q (J=6Hz)1H; 2.12 s,3H; 2.4-2.1 m, 1H; 4.1 q (J=8Hz),2H; 5.05 s,2H; 5.99 d (J=8Hz),H; 7.3-6.9 m,8H.

### Example 3

Synthesis of pentafluorobenzyl cis-2,2-dimethyl-3-[2-chloro-2-(2,2,2-trifluoroethoxy)-difluoromethyl]-vinyl-cyclopropane-carboxylate.

Under a nitrogen atmosphere, 0.99 g (5 mmol) of pentafluoro-benzyl alcohol, 5 ml of anhydrous ether, 1 ml of pyridine and 1.7 g (5 mmol) of cis-2,2-dimethyl-3-[2-chloro-2-(2,2,2-trifluoroethoxy)-difluoromethyl]-vinyl-cyclopropane-carbonyl chloride were placed in a 50 ml 3-neck flask.

The resulting reaction mixture was stirred for 3 hours at room temperature. Thereafter, the formed precipitate was filtered off and the filtrate was washed with HCl (1%), bicarbonate and brine whereupon the filtrate was thoroughly dried and concentrated to dryness. A crude oil (2.48 g) was obtained, which was chromatographed on silica gel (eluent 99:1 hexane/ethyl acetate), to yield 1.99 g of pure product.
- NMR (60 MHz, CDCl₃):: δ 1.3 s,6H; 2.4-1.8 m,2H; 4.2 q (J=8.5Hz),2H; 5.1 s,2H; 7.1-6.6. m,1H.

### Example 4

Synthesis of 2,3,5,6-tetrafluoro-4-methyl-benzyl trans-2,2-dimethyl-3-[2-chloro-2-(2,2,2-trifluoroethoxy)-difluoromethyl]-vinyl-cyclopropane-carboxylate.

Under a nitrogen atmosphere, 0.97 g (5 mmol) of 2,3,5,6-tetrafluoro-4-methyl-benzyl alcohol, 5 ml of anhydrous ether, 1 ml of pyridine and 1.7g (5 mmol) of trans-2,2-dimethyl-3-[2-chloro-2-(2,2,2-trifluoroethoxy)-difluoromethyl]-vinyl-cyclopropane-carbonyl chloride were placed in a 50 ml 3-neck flask.

The resulting reaction mixture was stirred for 3 hours at room temperature. Thereafter, the formed precipitate was filtered off and the filtrate was washed with HCl (1%), bicarbonate and brine whereupon the filtrate was thoroughly dried and concentrated to dryness. A crude oil (2.58 g) was obtained, which was chromatographed on silica gel (eluent 99:1 hexane/ethyl acetate), yielding 1.69 g of pure product.
- NMR (60 MHz, CDCl₃):: δ 1.1 s,3H; 1.2 s,3H; 1.62 d (J=6Hz),1H; 2.1 s,3H; 2.4-2.0 m,1H; 4.1 q (J=8Hz),2H; 5.1 s,2H; 6.0 d (J=8Hz),1H.

### Example 5

Synthesis of 2-methyl-3-phenyl-benzyl trans-Z-2,2-dimethyl-3-[2-(2,2,2-trifluoroethoxy)-difluoromethyl]-vinyl-cyclopropane-carboxylate.

Under a nitrogen atmosphere, 1.98 g (10 mmol) of 2-methyl-3-phenyl-benzyl alcohol, 5 ml of anhydrous ether,1 ml of pyridine and 3.07 g (5 mmol) of trans-Z-2,2-dimethyl-3-[2-(2,2,2-trifluoroethoxy)-difluoromethyl]-vinyl-cyclopropane-carbonyl chloride were placed in a 50 ml 3-neck flask.

The resulting reaction mixture was stirred for 3 hours at room temperature. Thereafter the formed precipitate was filtered off and the filtrate was washed with HCl (1%), bicarbonate and brine whereupon the filtrate was thoroughly dried and concentrated to dryness. A crude oil (4.65 g) was obtained, which was chromatographed on silica gel (eluent 99:1 hexane/ethyl acetate), to afford 3.46 g of pure product.
- NMR (60 MHz, CDCl₃):: δ 1.12 s,3H; 1.22 s,3H; 1.65 d (J=5Hz),1H; 2.15 s,3H; 2.7-2.3 m, 1H; 4.1 q (J=8.5Hz),2H; 5.11 s,2H; 5.7-5.4 m,2H; 7.4-7.0m, 8H.

### Example 6

Synthesis of 2-methyl-3-phenyl-benzyl trans-2,2-dimethyl-3-[2-chloro-2-(2,2,3,3-tetrafluoropropoxy)-difluoromethyl]-vinyl-cyclopropane-carboxylate.

Under a nitrogen atmosphere,0.99 g (5 mmol) of 2-methyl-3-phenyl-benzyl alcohol, 10 ml of anhydrous ether, 1 ml of pyridine and 1.86 g (5 mmol) of trans-2,2-dimethyl-3-[2-chloro-(2,2,3,3-tetrafluoropropoxy)-difluoromethyl]-vinyl-cyclopropane-carbonyl chloride were placed in a 50 ml 3-neck flask.

The resulting reaction mixture was stirred for 3 hours at room temperature. Thereafter, the formed precipitate was filtered off and the filtrate was washed with HCl (1%), bicarbonate and brine, whereupon the filtrate was thoroughly dried and concentrated to dryness. A crude oil (2.49 g) was obtained, which was chromatographed on silica gel (eluent 99:1 hexane/ethyl acetate) to yield 1.88 g of pure product.
- NMR (60 MHz, CDCl₃):: δ 1.12 s,3H; 1.27 s,3H; 1.74 d (J=5Hz),1H; 2.15 s,3H; 2.37 d·d (J₁=9Hz, J₂=5Hz), 1H; 4.15 t (J=12Hz),2H; 5.15 s,2H; 5.75 t·t (J₁=53Hz, J₂=4Hz),1H; 6.02 d (J=9Hz),1H; 7.3-7.05 m,8H.

### Example 7

Synthesis of pentafluoro-benzyl trans-2,2-dimethyl-3-[2-chloro-2-(2,2,3,3-tetrafluoropropoxy)-difluoromethyl]-vinyl-cyclopropane-carboxylate.

Under a nitrogen atmosphere,
0.99 g (5 mmol) of pentafluoro-benzyl alcohol, 10 ml of anhydrous ether, 1 ml of pyridine and 1.86 g (5 mmol) of trans-2,2-dimethyl-3-[2-chloro-(2,2,3,3-tetrafluoropropoxy)-difluoromethyl]-vinyl-cyclopropane-carbonyl chloride were placed in a 50 ml 3-neck flask.

The resulting reaction mixture was stirred for 3 hours at room temperature. Thereafter, the formed precipitate was filtered off and the filtrate was washed with HCl (1%), bicarbonate and brine. The filtrate was then thoroughly dried and concentrated to dryness. A crude oil (2.59 g) was obtained, which was chromatographed on silica gel (eluent 99:1 hexane/ethyl acetate), affording 2.05 g of pure product.
- NMR (60 MHz, CDCl₃):: δ 1.1 s,3H; 1.2 s,3H; 1.62 d (J=6Hz),1H; 2.25 d·d (J₁=6Hz, J₂=8Hz),1H; 4.10 t (J=12Hz),2H; 5.05 s,2H; 5.75 t·t (J₁=4Hz, J₂=52Hz),1H.

### Example 8

Synthesis of 2,3,5,6-tetrafluoro-4-methyl-benzyl trans-2,2-dimethyl-3-[2-chloro-2-(2,2,3,3-tetrafluoropropoxy)-difluoromethyl]-vinyl-cyclopropane-carboxylate.

Under a nitrogen atmosphere,
0.97 g (5 mmol) of 2,3,5,6-tetrafluoro-4-methyl-benzyl alcohol, 10 ml of anhydrous ether, 1 ml of pyridine, and 1.86 g (5 mmol) of trans-2,2-dimethyl-3-[2-chloro-(2,2,3,3-tetrafluoropropoxy)-difluoromethyl]-vinyl-cyclopropane-carbonyl chloride were placed in a 50 ml 3-neck flask.

The resulting reaction mixture was stirred for 3 hours at room temperature. Thereafter the formed precipitate was filtered off and the filtrate was washed with HCl (1%), bicarbonate and brine. The filtrate was then thoroughly dried and concentrated to dryness. A crude oil (2.51 g) was obtained, which was chromatographed on silica gel (eluent 99:1 hexane/ethyl acetate), affording 2 g of pure product.
- NMR (60 MHz, CDCl₃):: δ 1.1 s,3H; 1.2 s,3H; 1.65 d (J=6Hz),1H; 2.1 s,3H; 2.4-2.0 m,1H; 4.15 t (J=12Hz),2H; 5.1 s,2H; 5.8 t·t (J₁=4Hz, J₂=52Hz),1H; 6.0 d (J=8Hz),1H.

### Example 9

Synthesis of 2-methyl-3-phenyl-benzyl trans-2,2-dimethyl-3-(2-chloro-2-methoxy-difluoromethyl)-vinyl-cyclopropane-carboxylate.

Under a nitrogen atmosphere,
1.98 g (10 mmol) of 2-methyl-3-phenyl-benzyl alcohol, 15 ml of anhydrous ether, 1 ml of pyridine, and 2.73 g (10 mmol) of trans-2,2-dimethyl-3-(2-chloro-(2-methoxy-difluoromethyl)-vinyl-cyclopropane-carbonyl chloride were placed in a 50 ml 3-neck flask.

The resulting reaction mixture was stirred for 3 hours at room temperature. Thereafter, the formed precipitate was filtered off and the filtrate was washed with HCl (1%), bicarbonate and brine, whereupon said filtrate was thoroughly dried and concentrated to dryness. A crude oil (4.58 g) was obtained, which was chromatographed on silica gel (eluent 99:1 hexane/ethyl acetate), to yield 3.69 g of pure product.
- NMR (60 MHz, CDCl₃):: δ 1.2 s,6H; 1.67 d (J=6Hz),1H; 2.12 s,3H; 2.4-1.9 m,1H; 3.5 s,3H; 5.05 s,2H; 6.0 d (J=8Hz),1H; 7.3-7.0 m, 8H.

### Example 10

Synthesis of pentafluorobenzyl trans-2,2-dimethyl-3-(2-chloro-2-methoxy-difluoromethyl)-vinyl-cyclopropane-carboxylate.

Under a nitrogen atmosphere,
0.99 g (5 mmol) of pentafluorobenzyl alcohol, 5 ml of anhydrous ether, 1 ml of pyridine and 1.37 g (5 mmol) of trans-2,2-dimethyl-3-(2-chloro- 2-methoxy-difluoromethyl)-vinyl-cyclopropane-carbonyl chloride were placed in a 50 ml 3-neck flask.

The resulting reaction mixture was stirred for 3 hours at room temperature. Thereafter, the formed precipitate was filtered off and the filtrate was washed with HCl (1%), bicarbonate and brine, whereupon said filtrate was thoroughly dried and concentrated to dryness. A crude oil (2.08 g) was obtained, which was chromatographed on silica gel (eluent 99:1 hexane/ethyl acetate), to afford 1.64 g of pure product.
- NMR (60 MHz, CDCl₃):: δ 1.1 s,3H; 1.2 s,3H; 1.65 d (J=6Hz),1H; 2.3 d·d (J₁=9Hz, J₂=6Hz),1H; 3.5 s,3H; 5.1 s,2H; 5.98 d (J=9Hz),1H.

### Example 11

Synthesis of 2,3,5,6-tetrafluoro-4-methyl-benzyl trans-2,2-dimethyl-3-(2-chloro-2-methoxy-difluoromethyl)-vinyl-cyclopropane-carboxylate.

Under a nitrogen atmosphere,
0.97 g (5 mmol) of 2,3,5,6-tetrafluoro-4-methyl-benzyl alcohol, 5 ml of anhydrous ether, 1 ml of pyridine and 1.37 g of trans-2,2-dimethyl-3-(2-chloro- 2-methoxy-difluoromethyl)-vinyl-cyclopropane-carbonyl chloride were placed in a 50 ml 3-neck flask.

The resulting reaction mixture was stirred for 3 hours at room temperature. Thereafter, the formed precipitate was filtered off and the filtrate was washed with HCl (1%), bicarbonate and brine, whereupon said filtrate was thoroughly dried and concentrated to dryness. A crude oil (2 g) was obtained, which was chromatographed on silica gel (eluent 99:1 hexane/ethyl acetate), yielding 1.60 g of pure product.
- NMR (60 MHz, CDCl₃):: δ 1.1 s,3H; 1.2 s,3H; 1.65 d (J=6Hz),1H; 2.1 s,3H; 2.4-2.0 m,1H; 3.5 s,3H; 5.1 s,2H; 6.0 d (J=9Hz),1H;

### Example 12

Synthesis of 2-methyl-3-phenyl-benzyl trans-2,2-dimethyl-3-[2-chloro-2-(2,2,3,3,3-pentafluoropropoxy)-difluoromethyl]-vinyl-cyclopropane-carboxylate.

Under a nitrogen atmosphere,
0.99 g (5 mmol) of 2-methyl-3-phenyl-benzyl alcohol, 10 ml of anhydrous ether, 1 ml of pyridine and 1.96 g (5 mmol) of trans-2,2-dimethyl-3-[2-chloro-(2,2,3,3,3-pentafluoropropoxy)-difluoromethyl]-vinyl-cyclopropane-carbonyl chloride were placed in a 50 ml 3-neck flask.

The resulting reaction mixture was stirred for 3 hours at room temperature. Thereafter, the formed precipitate was filtered off and the filtrate was washed with HCl (1%), bicarbonate and brine, whereupon said filtrate was thoroughly dried and concentrated to dryness. A crude oil (2.72 g) was obtained, which was chromatographed on silica gel (eluent 99:1 hexane/ethyl acetate), yielding 2.17 g of pure product.
- NMR (60 MHz, CDCl₃):: δ 1.2 s,6H; 1.68 d (J=6Hz),1H; 2.12 s,3H; 2.4-1.9 m,1H; 4.2 t(J=12Hz),2H; 5.05 s,2H; 6.0 d (J=8Hz),1H; 7.3-7.0m, 8H.

### Example 13

### Determination of the insecticidal and acaricidal activity

A. Insecticidal activity against Macrosiphum euphorbiae (aphids).
   Potato plants grown in pots were infested with adult females of the aphid and some hours later a suspension in water-acetone (10% by volume of acetone) of the compound to be tested was sprayed thereon.
   24 hours after the treatment, the % death-rate of the aphids was determined in comparison to the death-rate of aphids infesting plants only treated with a 10% aqueous solution of acetone.
B. Insecticidal activity against Leptinotarsa decemlineata (Coleoptera).
   Potato plants grown in pots were infested with 4-days old larvae of the coleopter.
   Then a dispersion in water-acetone (10% by volume of acetone) of the compound to be tested was sprayed onto the plants.
   The % death-rate of the larvae was evaluated 48 hours after the treatment, in comparison to the death-rate of aphids infesting plants only treated with a 10% aqueous solution of acetone.
C. Insecticidal activity against Aedes aegypti (Diptera), Four-days old larvae of the diptera were transferred into vessels containing 300 ml of a solution, in water-acetone (1% of acetone), of the compound to be tested.
   The % death-rate of the larvae was evaluated 48 hours after the treatment, in comparison to the death-rate of larvae placed in an aqueous solution only containing 1% of acetone.
D. Insecticidal activity against Tetranychus urticae.
   Disks cut from bean leaves were infested with adult acari and then a solution in water-acetone (10% by volume of acetone) of the compound to be tested was sprayed thereon.
   The % death-rate was determined 24 hours after the treatment, in comparison to the death-rate of acari infesting disks onto which only a 10% aqueous solution of acetone had been sprayed.

The insecticidal activity was evaluated on the basis of the % death-rate at different doses of active compound, and was expressed according to the following rating scale:

| | |
|---|---|
| 5 = Complete activity, | death-rate higher than 90%. |
| 4 = High activity, | death-rate within the range of from 80 to 90%. |
| 3 = Fairly good activity, | death-rate within the range of from 60 to 79%. |
| 2 = Medium activity, | death-rate within the range of from 40 to 59%. |
| 1 = Poor activity, | death-rate within the range of from 20 to 39%. |
| 0 = Negligible activity, | death-rate within the range of from 0 to 19%. |

The test results are reported in Table 1.

**Table 1**

| Compound Example N. | Eggs of Leptinotarsa | Larvae of Aedes aegypti | Adults of Macrosiphum euphorbiae |
|---|---|---|---|
| 12 | 100 ppm 5 | 0.02 ppm 5 | |
| 1 | 100 ppm 5 | 0.02 ppm 4 | |
| 2 | 100 ppm 5 | 0.02 ppm 5 | 10 ppm 5 |
| | 10 ppm 3 | | |
| 3 | 100 ppm 5 | 0.02 ppm 5 | 10 ppm 5 |
| | | | 1 ppm 3 |
| 5 | 100 ppm 5 | 0.02 ppm 3 | 10 ppm 5 |

## Claims (Claims for the following Contracting State(s): BE, DE, FR, GB, NL)

1. Compounds having the general formula: 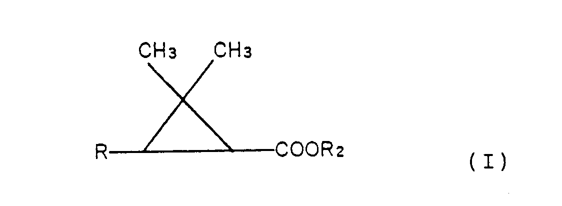 wherein:
R represents 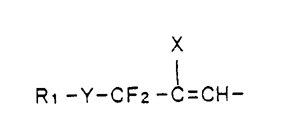 or
R₁-Y-CF₂-C≡C- ;
Y represents O or S;
X is selected from H, F, Cl, Br and -CF₃;
R₁ is a linear or branched (C₁-C₆)-alkyl or (C₃-C₆)-cycloalkyl group, optionally substituted with halogen atoms; and
R₂ represents one of the following groups: 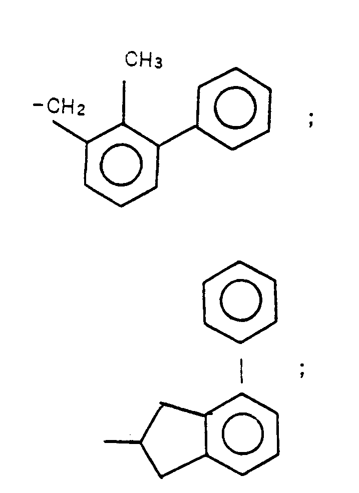 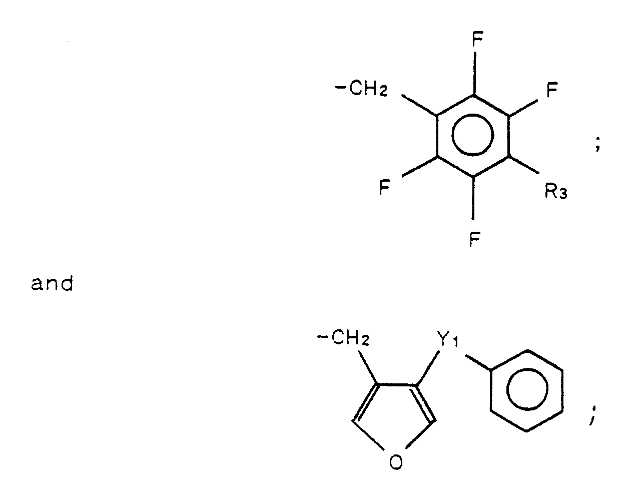 wherein:
R₃ represents F, a (C₁-C₅)-alkyl, an alkoxy, an alkylthio, an alkylsulfinyl or an alkylsulfonyl group; and
Y₁ is O or CH₂.

2. Compounds according to claim 1, wherein R is

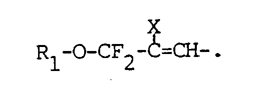

3. Compounds according to any one of claims 1 and 2, wherein R₁ is a (C₁-C₆)-alkyl or (C₃-C₆)-cycloalkyl group substituted with at least one fluorine atom, particularly a (C₁-C₃)-alkyl group substituted with one up to the maximum number of F atoms.

4. Compounds according to any one of claims 1 to 3, wherein R₂ is selected from 2-methyl-3-phenyl-benzyl, pentafluorobenzyl and 2,3,5,6-tetrafluoro-4-(C₁-C₅)-alkyl-benzyl.

5. Compounds according to any one of claims 1 to 4, wherein Y is O and R₁ is selected from methyl, trifluoromethyl, 2,2,2-trifluoroethyl, 2,2,3,3-tetrafluoropropyl and 2,2,3,3,3-pentafluoropropyl.

6. Compounds according to claim 1, i.e.
2-methyl-3-phenyl-benzyl cis-2,2-dimethyl-3-[2-chloro-2-(2,2,2-trifluoroethoxy)-difluoromethyl]-vinyl-cyclopropane-carboxylate,
2-methyl-3-phenyl-benzyl trans-2,2-dimethyl-3-[2-chloro-2-(2,2,2-trifluoroethoxy)-difluoromethyl]-vinyl-cyclopropane-carboxylate,
pentafluorobenzyl cis-2,2-dimethyl-3-[2-chloro-2-(2,2,2-trifluoroethoxy)-difluoromethyl]-vinyl-cyclopropane-carboxylate, 2,3,5,6-tetrafluoro-4-methyl-benzyl trans-2,2-dimethyl-3-[2-chloro-2-(2,2,2-trifluoroethoxy)-difluoromethyl]-vinyl-cyclopropane-carboxylate,
2-methyl-3-phenyl-benzyl trans-Z-2,2-dimethyl-3-[2-(2,2,2-trifluoroethoxy)-difluoromethyl]-vinyl-cyclopropane-carboxylate, 2-methyl-3-phenyl-benzyl trans-2,2-dimethyl-3-[2-chloro-2-(2,2,3,3-tetrafluoropropoxy)-difluoromethyl]-vinyl-cyclopropane-carboxylate,
pentafluoro-benzyl trans-2,2-dimethyl-3-[2-chloro-2-(2,2,3,3-tetrafluoropropoxy)-difluoromethyl]-vinyl-cyclopropane-carboxylate,
2,3,5,6-tetrafluoro-4-methyl-benzyl trans-2,2-dimethyl-3-[2-chloro-2-(2,2,3,3-tetrafluoropropoxy)-difluoromethyl]-vinyl-cyclopropane-carboxylate,
2-methyl-3-phenyl-benzyl trans-2,2-dimethyl-3-(2-chloro-2-methoxy-difluoromethyl)-vinyl-cyclopropane-carboxylate, pentafluorobenzyl trans-2,2-dimethyl-3-(2-chloro-2-methoxy-difluoromethyl)-vinyl-cyclopropane-carboxylate,
2,3,5,6-tetrafluoro-4-methyl-benzyl trans-2,2-dimethyl-3-(2-chloro-2-methoxy-difluoromethyl)-vinyl-cyclopropane-carboxylate and
2-methyl-3-phenyl-benzyl trans-2,2-dimethyl-3-[2-chloro-2-(2,2,3,3,3-pentafluoropropoxy)-difluoromethyl]-vinyl-cyclopropane-carboxylate.

7. Process for preparing the compounds according to claim 1, comprising the reaction of a carboxylic acid, or an acyl derivative thereof, of formula (II): 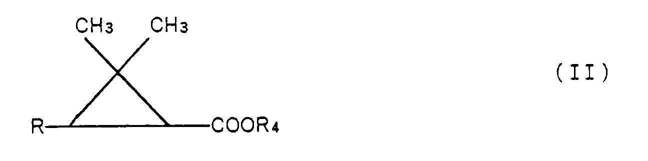 with an alcohol of formula:
R₂-OH
in which R and R₂ have the meanings specified in claim 1 and R₄ represents H, Cl or (C₁-C₄)-alkyl, in an inert organic solvent and in the presence of an organic base, said reaction being carried out at room temperature.

8. Process according to claim 7, wherein R₄ is Cl and the organic base is a tertiary amine, preferably selected from pyridine and triethylamine.

9. Method for controlling infestations by noxious insects and acari,comprising the distribution throughout the infested area of an effective insecticidal amount of one or more compounds according to any one of claims 1 to 6, together with inert solid or liquid carriers and, optionally, other additives.

10. Insecticidal and acaricidal compositions containing an effective insecticidal amount of one or more compounds according to any one of claims 1 to 6 as at least one of their active ingredients, together with inert solid or liquid carriers and, optionally, other additives.

## Claims (Claims for the following Contracting State(s): ES)

1. Process for preparing compounds having the general formula: 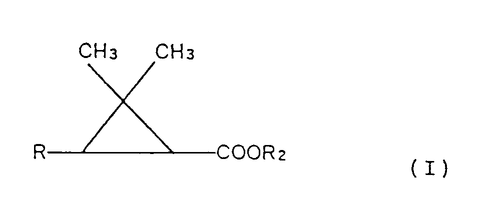 wherein:
R represents 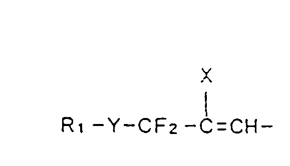 or
R₁-Y-CF₂-C≡C- ;
Y represents O or S;
X is selected from H, F, Cl, Br and -CF₃;
R₁ is a linear or branched (C₁-C₆)-alkyl or (C₃-C₆)-cycloalkyl group, optionally substituted with halogen atoms; and
R₂ represents one of the following groups: 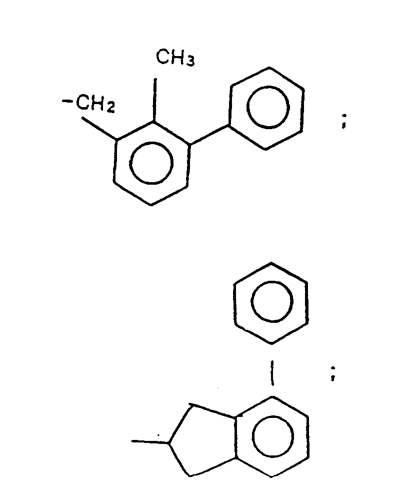 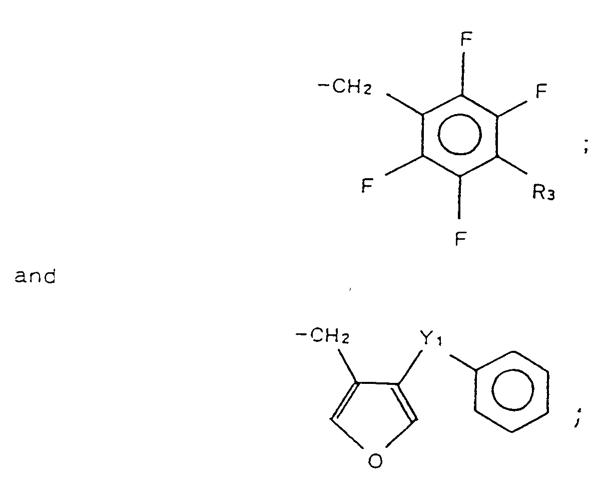 wherein:
R₃ represents F, a (C₁-C₅)-alkyl, an alkoxy, an alkylthio, an alkylsulfinyl or an alkylsulfonyl group; and
Y₁ is O or CH₂ , comprising the reaction of a carboxylic acid, or an acyl derivative thereof, of formula (II): 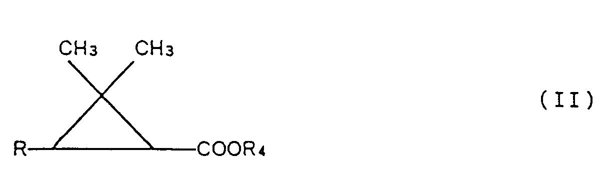 with an alcohol of formula:
R₂-OH
in which R and R₂ have the meanings specified in claim 1 and R₄ represents H, Cl or (C₁-C₄)-alkyl, in an inert organic solvent and in the presence of an organic base, said reaction being carried out at room temperature.

2. Process according to claim 1, wherein R is

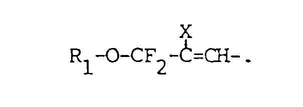

3. Process according to any one of claims 1 and 2, wherein R₁ is a (C₁-C₆)-alkyl or (C₃-C₆)-cycloalkyl group substituted with at least one fluorine atom, particularly a (C₁-C₃)-alkyl group substituted with one up to the maximum number of F atoms.

4. Process according to any one of claims 1 to 3, wherein R₂ is selected from 2-methyl-3-phenyl-benzyl, pentafluorobenzyl and 2,3,5,6-tetrafluoro-4-(C₁-C₅)-alkyl-benzyl.

5. Process according to any one of claims 1 to 4, wherein Y is O and R₁ is selected from methyl, trifluoromethyl, 2,2,2-trifluoroethyl, 2,2,3,3-tetrafluoropropyl and 2,2,3,3,3-pentafluoropropyl.

6. Process according to claim 1, wherein the compounds according to formula (I) are
2-methyl-3-phenyl-benzyl cis-2,2-dimethyl-3-[2-chloro-2-(2,2,2-trifluoroethoxy)-difluoromethyl]-vinyl-cyclopropane-carboxylate,
2-methyl-3-phenyl-benzyl trans-2,2-dimethyl-3-[2-chloro-2-(2,2,2-trifluoroethoxy)-difluoromethyl]-vinyl-cyclopropane-carboxylate,
pentafluorobenzyl cis-2,2-dimethyl-3-[2-chloro-2-(2,2,2-trifluoroethoxy)-difluoromethyl]-vinyl-cyclopropane-carboxylate,
2,3,5,6-tetrafluoro-4-methyl-benzyl trans-2,2-dimethyl-3-[2-chloro-2-(2,2,2-trifluoroethoxy)-difluoromethyl]-vinyl-cyclopropane-carboxylate,
2-methyl-3-phenyl-benzyl trans-Z-2,2-dimethyl-3-[2-(2,2,2-trifluoroethoxy)-difluoromethyl]-vinyl-cyclopropane-carboxylate,
2-methyl-3-phenyl-benzyl trans-2,2-dimethyl-3-[2-chloro-2-(2,2,3,3-tetrafluoropropoxy)-difluoromethyl]-vinyl-cyclopropane-carboxylate,
pentafluoro-benzyl trans-2,2-dimethyl-3-[2-chloro-2-(2,2,3,3-tetrafluoropropoxy)-difluoromethyl]-vinyl-cyclopropane-carboxylate,
2,3,5,6-tetrafluoro-4-methyl-benzyl trans-2,2-dimethyl-3-[2-chloro-2-(2,2,3,3-tetrafluoropropoxy)-difluoromethyl]-vinyl-cyclopropane-carboxylate,
2-methyl-3-phenyl-benzyl trans-2,2-dimethyl-3-(2-chloro2-methoxy-difluoromethyl)-vinyl-cyclopropane-carboxylate,
pentafluorobenzyl trans-2,2-dimethyl-3-(2-chloro-2-methoxy-difluoromethyl)-vinyl-cyclopropane-carboxylate,
2,3,5,6-tetrafluoro-4-methyl-benzyl trans-2,2-dimethyl-3-(2-chloro-2-methoxy-difluoromethyl]-vinyl-cyclopropane-carboxylate and
2-methyl-3-phenyl-benzyl trans-2,2-dimethyl-3-[2-chloro-2-(2,2,3,3,3-pentafluoropropoxy)-difluoromethyl]-vinyl-cyclopropane-carboxylate.

7. Process according to claim 1, wherein R₄ is Cl and the organic base is a tertiary amine, preferably selected from pyridine and triethylamine.

8. Insecticidal and acaricidal compositions containing an effective insecticidal amount of one or more compounds according to any one of claims 1 to 6 as at least one of their active ingredients, together with inert solid or liquid carriers and, optionally, other additives.

## Patentansprüche (Patentansprüche für folgende(n) Vertragsstaat(en): BE, DE, FR, GB, NL)

1. Verbindungen der allgemeinen Formel: 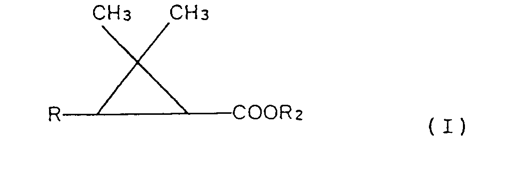 worin:
R = 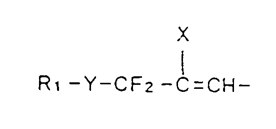 oder
R₁-Y-CF₂-C≡C-
bedeutet;
Y = O oder S ist;
X ausgewählt wird aus H, F, Cl, Br und -CF₃;
R₁ eine lineare oder verzweigte (C₁-C₆)-Alkyl- oder (C₃-C₆)-Cycloalkylgruppe, gegebenenfalls substituiert mit Halogenatomen ist; und
R₂ eine der folgenden Gruppen darstellt: 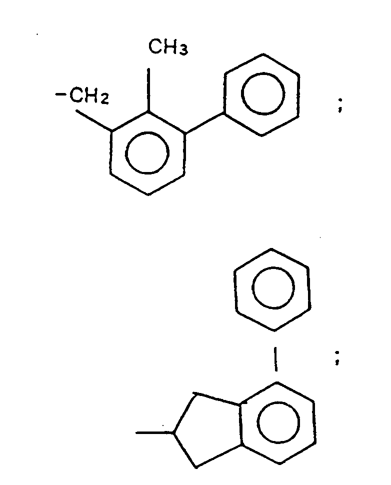 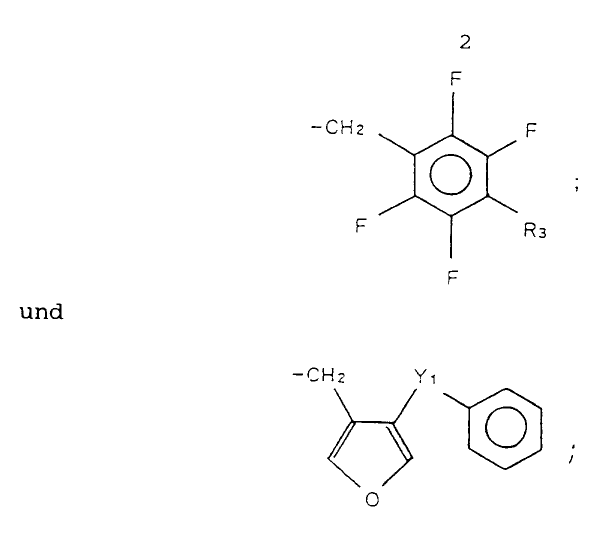 worin:
R₃ F, eine (C₁-C₅)-Alkyl-, eine Alkoxy-, eine Alkylthio-, eine Alkylsulfinyl- oder eine Alkylsulfonylgruppe bedeutet; und
Y₁ = O oder CH₂ ist.

2. Verbindungen nach Anspruch 1, worin 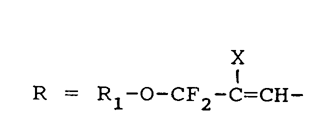 ist.

3. Verbindungen nach einem der Ansprüche 1 oder 2, worin R₁ eine (C₁-C₆)-Alkyl- oder (C₃-C₆)-Cycloalkylgruppe, substituiert mit wenigstens einem Fluoratom, insbesondere eine (C₁-C₃)-Alkylgruppe, substituiert mit einem bis zur maximalen Anzahl von F-Atomen, bedeutet.

4. Verbindungen nach einem der Ansprüche 1 bis 3, worin R₂ ausgewählt wird aus 2-Methyl-3-phenyl-benzyl, Pentafluorbenzyl und 2,3,5,6-Tetrafluor-4-(C₁-C₅)-alkylbenzyl.

5. Verbindungen nach einem der Ansprüche 1 bis 4, worin Y = O und R₁ ausgewählt ist aus Methyl, Trifluormethyl, 2,2,2-Trifluorethyl, 2,2,3,3-Tetrafluorpropyl und 2,2,3,3,3-Pentafluorpropyl.

6. Verbindungen nach Anspruch 1, z. B.
2-Methyl-3-phenyl-benzyl-cis-2,2-dimethyl-3-[2-chlor-2-(2,2,2-trifluor-ethoxy)-difluor-methyl]-vinyl-cyclopropan-carboxylat,
2-Methyl-3-phenyl-benzyl-trans-2,2-dimethyl-3-[2-chlor-2-(2,2,2-trifluor-ethoxy)-difluor-methyl]-vinyl-cyclopropan-carboxylat,
Pentafluor-benzyl-cis-2,2-dimethyl-3-[2-chlor-2-(2,2,2-trifluor-ethoxy)-difluor-methyl]-vinyl-cyclopropan-carboxylat,
2,3,5,6-Tetrafluor-4-methyl-benzyl-trans-2,2-dimethyl-3-[2-chlor-2-(2,2,2-trifluor-ethoxy)-difluor-methyl]-vinyl-cyclopropan-carboxylat,
2-Methyl-3-phenyl-benzyl-trans-Z-2,2-dimethyl-3-[2-(2,2,2-trifluor-ethoxy)-difluor-methyl]-vinyl-cyclopropan-carboxylat,
2-Methyl-3-phenyl-benzyl-trans-2,2-dimethyl-3-[2-chlor-2-(2,2,3,3-tetrafluor-propoxy)-difluor-methyl]-vinyl-cyclopropan-carboxylat,
Pentafluor-benzyl-trans-2,2-dimethyl-3-[2-chlor-2-(2,2,3,3-tetrafluor-propoxy)-difluor-methyl]-vinyl-cyclopropan-carboxylat,
2,3,5,6-Tetrafluor-4-methyl-benzyl-trans-2,2-dimethyl-3-[2-chlor-2-(2,2,3,3-tetrafluor-propoxy)-difluor-methyl]-vinyl-cyclopropan-carboxylat,
2-Methyl-3-phenyl-benzyl-trans-2,2-dimethyl-3-(2-chlor-2-methoxy-difluor-methyl)-vinyl-cyclopropan-carboxylat,
Pentafluor-benzyl-trans-2,2-dimethyl-3-(2-chlor-2-methoxy-difluor-methyl)-vinyl-cyclopropan-carboxylat,
2,3,5,6-Tetrafluor-4-methyl-benzyl-trans-2,2-dimethyl-3-(2-chlor-2-methoxy-difluor-methyl)-vinyl-cyclopropan-carboxylat, und
2-Methyl-3-phenyl-benzy-trans-2,2-dimethyl-3-[2-chlor-2-(2,2,3,3,3-pentafluor-propoxy)-difluor-methyl]-vinyl-cyclopropan-carboxylat.

7. Verfahren zur Herstellung der Verbindungen nach Anspruch 1, welches umfaßt: das Umsetzen einer Carbonsäure oder einem Acylderivat von dieser, der Formel (II): 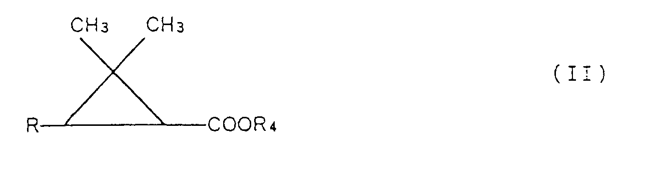 mit einem Alkohol der Formel:
R₂ - OH
worin R und R₂ die in Anspruch 1 definierten Bedeutungen haben und R₄ = H, Cl oder (C₁-C₄)-Alkyl bedeutet,
in einem inerten organischen Lösungsmittel und in Anwesenheit einer organischen Base,
wobei die genannte Umsetzung bei Raumtemperatur erfolgt.

8. Verfahren nach Anspruch 7, worin R₄ = Cl und die organische Base ein tertiäres Amin, vorzugsweise ausgewählt aus Pyridin und Triethylamin, ist.

9. Verfahren zur Bekämpfung von Befall durch schädliche Insekten und Milben, welches die Verteilung über die befallene Fläche einer wirksamen insektiziden Menge einer oder mehrerer der Verbindungen nach einem der Ansprüche 1 bis 6, zusammen mit einem inerten Feststoff oder flüssigem Träger und gegebenenfalls anderen Additiven umfaßt.

10. Insektizide und Akarizide Zusammensetzungen, die eine wirksame insektizide Menge einer oder mehrerer der Verbindungen nach einem der Ansprüche 1 bis 6 als wenigstens einen ihrer aktiven Bestandteile, zusammen mit einem inerten Feststoff oder flüssigem Träger und gegebenenfalls anderen Additiven, enthält.

## Patentansprüche (Patentansprüche für folgende(n) Vertragsstaat(en): ES)

1. Verfahren zur Herstellung von Verbindungen der allgemeinen Formel: 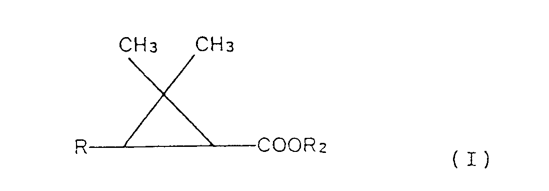 worin:
R = 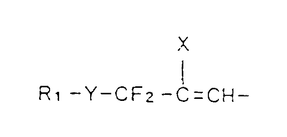 oder
R₁-Y-CF₂-C≡C-
bedeutet;
Y = O oder S ist;
X ausgewählt wird aus H, F, Cl, Br und -CF₃;
R₁ eine lineare oder verzweigte (C₁-C₆)-Alkyl- oder (C₃-C₆)-Cycloalkylgruppe, gegebenenfalls substituiert mit Halogenatomen ist; und
R₂ eine der folgenden Gruppen darstellt: 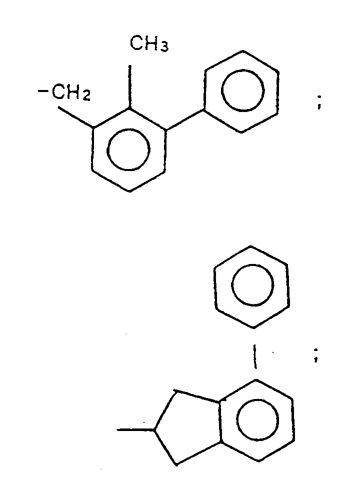 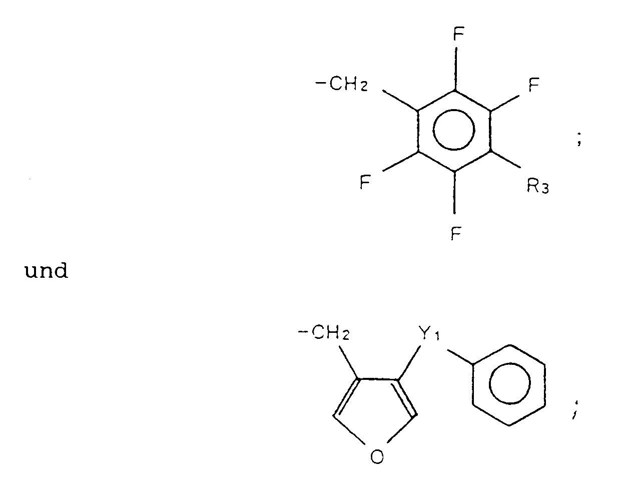 worin:
R₃ F, eine (C₁-C₅)-Alkyl-, eine Alkoxy-, eine Alkylthio-, eine Alkylsulfinyl- oder eine Alkylsulfonylgruppe bedeutet; und
Y₁ = O oder CH₂ ist,
welches umfaßt: das Umsetzen einer Carbonsäure oder einem Acylderivat von dieser, der Formel (II): 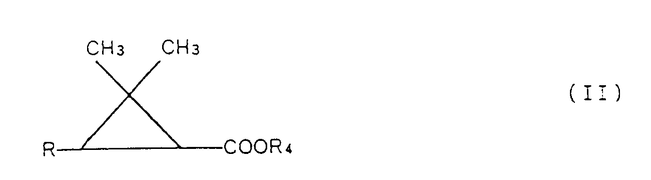 mit einem Alkohol der Formel:
R₂ - OH
worin R und R₂ die in Anspruch 1 definierten Bedeutungen haben und R₄ = H, Cl oder (C₁-C₄)-Alkyl bedeutet,
in einem inerten organischen Lösungsmittel und in Anwesenheit einer organischen Base,
wobei die genannte Umsetzung bei Raumtemperatur erfolgt.

2. Verfahren nach Anspruch 1, worin 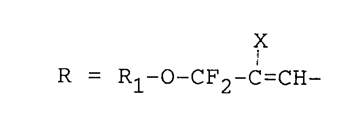 ist.

3. Verfahren nach einem der Ansprüche 1 oder 2, worin R₁ eine (C₁-C₆)-Alkyl- oder (C₃-C₆)-Cycloalkylgruppe, substituiert mit wenigstens einem Fluoratom, insbesondere eine (C₁-C₃)-Alkylgruppe, substituiert mit einem bis zur maximalen Anzahl von F-Atomen, bedeutet.

4. Verfahren nach einem der Ansprüche 1 bis 3, worin R₂ ausgewählt wird aus 2-Methyl-3-phenyl-benzyl, Pentafluorbenzyl und 2,3,5,6-Tetrafluor-4-(C₁-C₅)-alkylbenzyl.

5. Verfahren anch einem der Ansprüche 1 bis 4, worin Y = O und R₁ ausgewählt ist aus Methyl, Trifluormethyl, 2,2,2-Trifluorethyl, 2,2,3,3-Tetrafluorpropyl und 2,2,3,3,3-Pentafluorpropyl.

6. Verfahren nach Anspruch 1, worin die Verbindungen der Formel (I) sind:
2-Methyl-3-phenyl-benzyl-cis-2,2-dimethyl-3-[2-chlor-2-(2,2,2-trifluor-ethoxy)-difluor-methyl]-vinyl-cyclopropan-carboxylat,
2-Methyl-3-phenyl-benzyl-trans-2,2-dimethyl-3-[2-chlor-2-(2,2,2-trifluor-ethoxy)-difluor-methyl]-vinyl-cyclopropan-carboxylat,
Pentafluor-benzyl-cis-2,2-dimethyl-3-[2-chlor-2-(2,2,2-trifluor-ethoxy)-difluor-methyl]-vinyl-cyclopropan-carboxylat,
2,3,5,6-Tetrafluor-4-methyl-benzyl-trans-2,2-dimethyl-3-[2-chlor-2-(2,2,2-trifluor-ethoxy)-difluor-methyl]-vinyl-cyclopropan-carboxylat,
2-Methyl-3-phenyl-benzyl-trans-Z-2,2-dimethyl-3-[2-(2,2,2-trifluor-ethoxy)-difluor-methyl]-vinyl-cyclopropan-carboxylat,
2-Methyl-3-phenyl-benzyl-trans-2,2-dimethyl-3-[2-chlor-2-(2,2,3,3-tetrafluor-propoxy)-difluor-methyl]-vinyl-cyclopropan-carboxylat,
Pentafluor-benzyl-trans-2,2-dimethyl-3-[2-chlor-2-(2,2,3,3-tetrafluor-propoxy)-difluor-methyl]-vinyl-cyclopropan-carboxylat,
2,3,5,6-Tetrafluor-4-methyl-benzyl-trans-2,2-dimethyl-3-[2-chlor-2-(2,2,3,3-tetrafluor-propoxy)-difluor-methyl]-vinyl-cyclopropan-carboxylat,
2-Methyl-3-phenyl-benzyl-trans-2,2-dimethyl-3-(2-chlor-2-methoxy-difluor-methyl)-vinyl-cyclopropan-carboxylat,
Pentafluor-benzyl-trans-2,2-dimethyl-3-(2-chlor-2-methoxy-difluor-methyl)-vinyl-cyclopropan-carboxylat,
2,3,5,6-Tetrafluor-4-methyl-benzyl-trans-2,2-dimethyl-3-(2-chlor-2-methoxy-difluor-methyl)-vinyl-cyclopropan-carboxylat, und
2-Methyl-3-phenyl-benzyl-trans-2,2-dimethyl-3-[2-chlor-2-(2,2,3,3,3-pentafluor-propoxy)-difluor-methyl]-vinyl-cyclopropan-carboxylat,

7. Verfahren nach Anspruch 6, worin R₄ = Cl und die organische Base ein tertiäres Amin, vorzugsweise ausgewählt aus Pyridin und Triethylamin, ist.

8. Insektizide und Akarizide Zusammensetzungen, die eine wirksame insektizide Menge einer oder mehrerer der Verbindungen nach einem der Ansprüche 1 bis 6 als wenigstens einen ihrer aktiven Bestandteile, zusammen mit einem inerten Feststoff oder flüssigem Träger und gegebenenfalls anderen Additiven, enthält.

## Revendications (Revendications pour l'(les) Etat(s) contractant(s) suivant(s): BE, DE, FR, GB, NL)

1. Dérivés représentés par la formule générale: 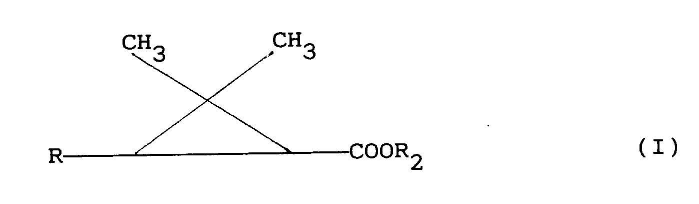 dans laquelle:
R représente 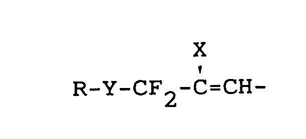 ou
R₁-Y-CF₂-C≡C-;
Y représente O ou S;
X est sélectionné parmi H, F, Cl, Br et -CF₃;
R₁ représente un radical cycloalkyle en C₃-C₆ ou alkyle en C₁-C₆, ramifié ou linéaire, éventuellement substitué avec des atomes d'halogène; et
R₂ représente l'un des groupes suivants: 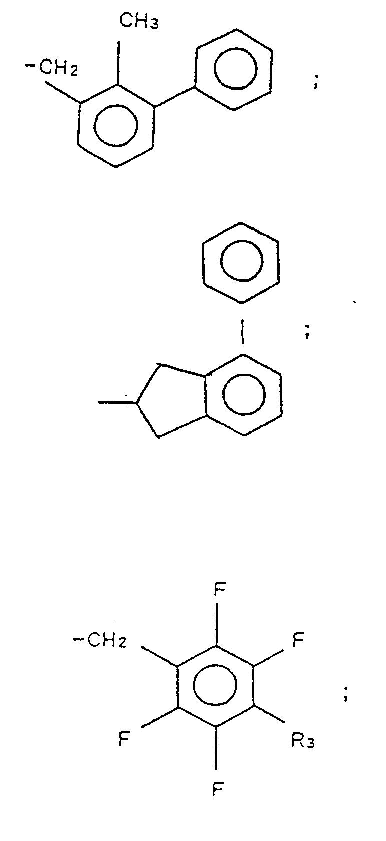 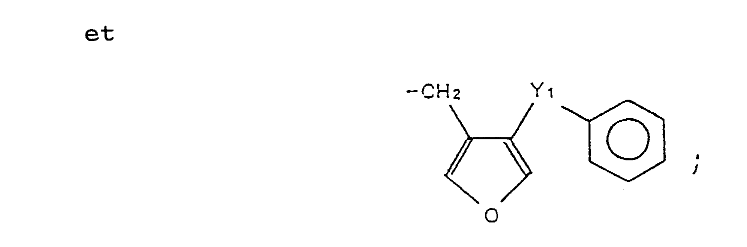 dans lesquels:
R₃ représente F, un radical alkyle en C₁ à C₅, alcoxy, alkylthio, alkylsulfinyle ou alkylsulfonyle; et
Y₁ représente O ou CH₂.

2. Dérivés selon la revendication 1, caractérisés en ce que R représente:

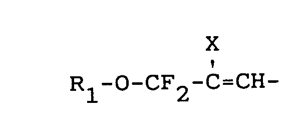

3. Dérivés selon l'une quelconque des revendications 1 et 2, caractérisés en ce que R₁ représente un radical alkyle en C₁ à C₆ ou un radical cycloalkyle en C₃ à C₆, substitué par au moins un atome de fluor, et plus particulièrement un radical alkyle en C₁ à C₃ substitué par un nombre d'atomes de fluor compris entre 1 et le nombre maximal.

4. Dérivés selon l'une quelconque des revendications 1 à 3, caractérisés en ce que R₂ est sélectionné parmi les radicaux 2-méthyl-3-phényl-benzyle, pentafluorobenzyle et 2,3,5,6-tétrafluoro-4-(C₁-C₅)-alkylbenzyle.

5. Dérivés selon l'une quelconque des revendications 1 à 4, caractérisés en ce que Y représente O et R₁ est sélectionné parmi les radicaux méthyle, trifluorométhyle, 2,2,2-trifluoroéthyle, 2,2,3,3-tétrafluoropropyle et 2,2,3,3,3-pentafluoropropyle.

6. Dérivés selon la revendication 1, c'est-à-dire:
cis-2,2-diméthyl-3-[2-chloro-2-(2,2,2-trifluoroéthoxy)-difluorométhyl]-vinyl-cyclopropane carboxylate de 2-méthyl-3-phénylbenzyle;
trans-2,2-diméthyl-3-[2-chloro-2-(2,2,2-trifluoroéthoxy)-difluorométhyl]-vinyl-cyclopropane carboxylate de 2-méthyl-3-phénylbenzyle;
cis-2,2-diméthyl-3-[2-chloro-2-(2,2,2-trifluoroéthoxy)-difluorométhyl]-vinyl-cyclopropane carboxylate de pentafluorobenzyle;
trans-2,2-diméthyl-3-[2-chloro-2-(2,2,2-trifluoroéthoxy)-difluorométhyl]-vinyl-cyclopropane carboxylate de 2,3,5,6-tétrafluoro-4-méthylbenzyle;
trans-Z-2,2-diméthyl-3-[2-chloro-2-(2,2,2-trifluoroéthoxy)-difluorométhyl]-vinyl-cyclopropane carboxylate de 2-méthyl-3-phénylbenzyle;
trans-2,2-diméthyl-3-[2-chloro-2-(2,2,3,3-tétrafluoropropoxy)-difluorométhyl]-vinyl-cyclopropane carboxylate de 2-méthyl-3-phénylbenzyle;
trans-2,2-diméthyl-3-[2-chloro-2-(2,2,3,3-tétrafluoropropoxy)-difluorométhyl]-vinyl-cyclopropane carboxylate de pentafluorobenzyle;
trans-2,2-diméthyl-3-[2-chloro-2-(2,2,3,3-tétrafluoropropoxy)-difluorométhyl]-vinyl-cyclopropane carboxylate de 2,3,5,6-tétrafluoro-4-méthylbenzyle;
trans-2,2-diméthyl-3-(2-chloro-2-méthoxy-difluorométhyl)-vinyl-cyclopropane carboxylate de 2-méthyl-3-phénylbenzyle;
trans-2,2-diméthyl-3-(2-chloro-2-méthoxy-difluorométhyl)-vinyl-cyclopropane carboxylate de pentafluorobenzyle;
trans-2,2-diméthyl-3-(2-chloro-2-méthoxy-difluorométhyl)-vinyl-cyclopropane carboxylate de 2,3,5,6-tétrafluoro-4-méthylbenzyle; et
trans-2,2-diméthyl-3-[2-chloro-2-(2,2,3,3,3-pentafluoropropoxy)-difluorométhyl]-vinyl-cyclopropane carboxylate de 2-méthyl-3-phénylbenzyle.

7. Procédé de préparation des dérivés selon la revendication 1, comprenant la réaction d'un acide carboxylique ou d'un dérivé acyle de ce dernier, de formule (II); 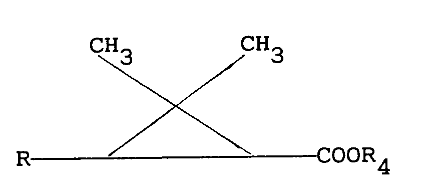 avec un alcool de formule:
R₂-OH
dans lesquelles:
R et R₂ sont tels que définis dans la revendication 1, et
R₄ représente H,Cl ou un radical alkyle en C₁ à C₄,
dans un solvant organique inerte et en présence d'une base organique, ladite réaction étant réalisée à la température ambiante.

8. Un procédé selon la revendication 7, caractérisé en ce que R₄ représente Cl et la base organique est une amine tertiaire, de préférence sélectionnée parmi la pyridine et la triéthylamine.

9. Un procédé de contrôle des infections par les acariens et les insectes nuisibles, comprenant la distribution sur l'aire infectée d'une quantité efficace du point de vue insecticide d'un ou de plusieurs des dérivés selon l'une quelconque des dérivés 1 à 6, en combinaison avec des supports liquides ou solides inertes et, éventuellement, d'autres additifs.

10. Des compositions acaricides et insecticides contenant une quantité efficace du point de vue insecticide d'un ou de plusieurs des dérivés selon l'une quelconque des revendications 1 à 6, qui représentent au moins l'un de leurs principes actifs, ainsi que des supports liquides ou solides inertes et éventuellement d'autres additifs.

## Revendications (Revendications pour l'(les) Etat(s) contractant(s) suivant(s): ES)

1. Procédé de préparation de dérivés ayant la formule générale suivante: 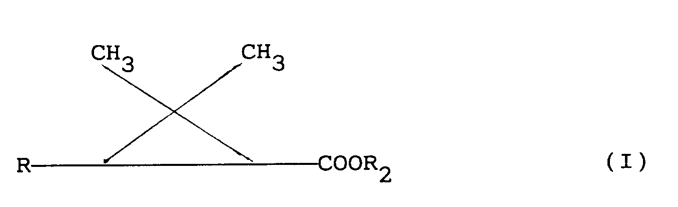 dans laquelle:
R représente 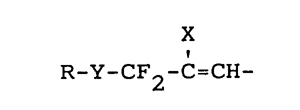 ou
R₁-Y-CF₂-C≡C-;
Y représente O ou S;
X est sélectionné parmi H, F, Cl, Br et -CF₃;
R₁ représente un radical cycloalkyle en C₃-C₆ ou alkyle en C₁-C₆, ramifié ou linéaire, éventuellement substitué avec des atomes d'halogène; et
R₂ représente l'un des groupes suivants: 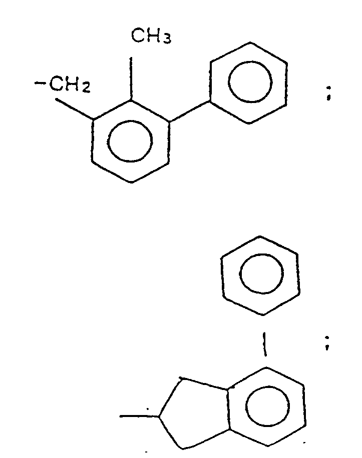 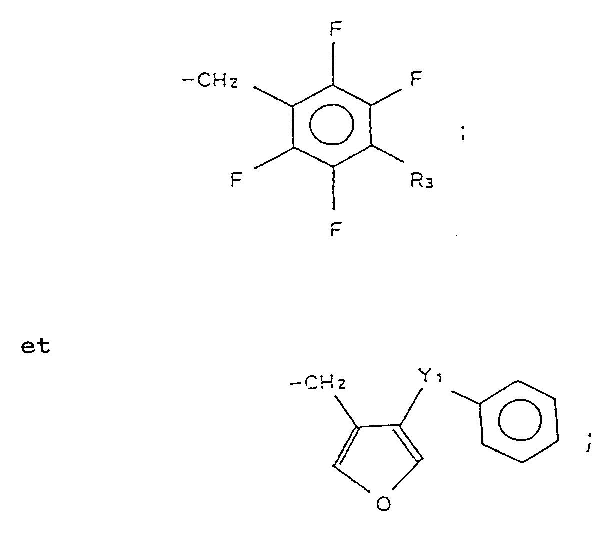 dans lesquels:
R₃ représente F, un radical alkyle en C₁ à C₅, alcoxy, alkylthio, alkylsulfinyle ou alkylsulfonyle; et
Y₁ représente O ou CH₂,
qui comprend la réaction d'un acide carboxylique ou d'un dérivé acyle de ce dernier de formule (II): 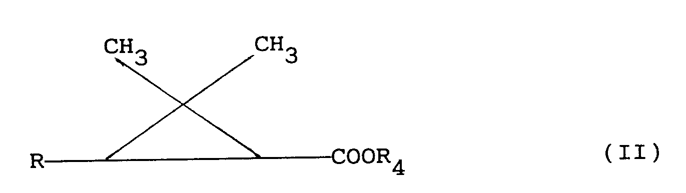 avec un alcool de formule:
R₂-OH
dans lesquelles:
R et R₂ sont tels que définis dans la revendication 1; et
R₄ représente H, Cl ou un radical alkyle en C₁ à C₄;
dans un solvant inerte et en présence d'une base organique, ladite réaction étant réalisée à la température ambiante.

2. Un procédé selon la revendication 1, caractérisé en ce que R représente:

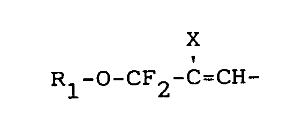

3. Un procédé selon l'une quelconque des revendications 1 et 2, caractérisé en ce que R₁ représente un radical alkyle en C₁ à C₆ ou un radical cycloalkyle en C₃ à C₆ substitué par au moins un atome de fluor et plus particulièrement un radical alkyle en C₁ à C₃ substitué par un nombre d'atomes de fluor compris entre 1 et le nombre maximal.

4. Un procédé selon l'une quelconque des revendications 1 à 3, caractérisé en ce que R₂ est sélectionné parmi les radicaux 2-méthyl-3-phényl-benzyle, pentafluorobenzyle et 2,3,5,6-tétrafluoro-4-(C₁-C₅)-alkylbenzyle.

5. Un procédé selon l'une quelconque des revendications 1 à 3, caractérisé en ce que Y représente 0 et R₁ est sélectionné parmi les radicaux méthyle, trifluorométhyle, 2,2,2-trifluoroéthyle, 2,2,3,3-tétrafluoropropyle et 2,2,3,3,3-pentafluoropropyle.

6. Un procédé selon la revendication 1, caractérisé en ce que les dérivés représentés par la formule (I) sont:
cis-2,2-diméthyl-3-[2-chloro-2-(2,2,2-trifluoroéthoxy)-difluorométhyl]-vinyl-cyclopropane carboxylate de 2-méthyl-3-phénylbenzyle;
trans-2,2-diméthyl-3-[2-chloro-2(2,2,2-trifluoroéthoxy)-difluorométhyl]-vinyl-cyclopropane carboxylate de 2-méthyl-3-phénylbenzyle;
cis-2,2-diméthyl-3-[2-chloro-2-(2,2,2-trifluoroéthoxy)-difluorométhyl]-vinyl-cyclopropane carboxylate de pentafluorobenzyle;
trans-2,2-diméthyl-3-[2-chloro-2-(2,2,2-trifluoroéthoxy)-difluorométhyl]-vinyl-cyclopropane carboxylate de 2,3,5,6-tétrafluoro-4-méthylbenzyle;
trans-Z,2-2-diméthyl-3-[2-chloro-2-(2,2,2-trifluoroéthoxy)-difluorométhyl]-vinyl-cyclopropane carboxylate de 2-méthyl-3-phénylbenzyle;
trans-2,2-diméthyl-3-[2-chloro-2-(2,2,3,3-tétrafluoropropoxy)-difluorométhyl]-vinyl-cyclopropane carboxylate de 2-méthyl-3-phénylbenzyle;
trans-2,2-diméthyl-3-[2-chloro-2-(2,2,3,3-tétrafluoropropoxy)-difluorométhyl]-vinyl-cyclopropane carboxylate de pentafluorobenzyle;
trans-2,2-diméthyl-3-[2-chloro-2-(2,2,3,3-tétrafluoropropoxy)-difluorométhyl]-vinyl-cyclopropane carboxylate de 2,3,5,6-tétrafluoro-4-méthylbenzyle;
trans-2,2-diméthyl-3-(2-chloro-2-méthoxy-difluorométhyl)-vinyl-cyclopropane carboxylate de 2-méthyl-3-phénylbenzyle;
trans-2,2-diméthyl-3-(2-chloro-2-méthoxy-difluorométhyl)-vinyl-cyclopropane carboxylate de pentafluorobenzyle;
trans-2,2-diméthyl-3-(2-chloro-2-méthoxy-difluorométhyl)-vinyl-cyclopropane carboxylate de 2,3,5,6-tétrafluoro-4-méthylbenzyle; et
trans-2,2-diméthyl-3-[2-chloro-2-(2,2,3,3,3-pentafluoropropoxy)-difluorométhyl]-vinyl-cyclopropane carboxylate de 2-méthyl-3-phénylbenzyle.

7. Un procédé selon la revendication 1, caractérisé en ce que R₄ représente Cl et la base organique est une amine tertiaire, de préférence sélectionnée parmi la pyridine et la triéthylamine.

8. Les compositions acaricides et insecticides contenant une quantité efficace du point de vue insecticide d'un ou de plusieurs dérivés selon l'une quelconque des revendications 1 à 6, représentant au moins l'un de leurs principes actifs, ainsi que des supports liquides ou solides inertes et éventuellement d'autres additifs.
